# DEMANDE DE BREVET EUROPEEN

(11) **EP 0 645 787 A1**
(43) Date de publication de la demande: **29.03.1995**
(21) Numéro de dépôt: 94470030.1
(22) Date de dépôt: 23.09.1994
(51) Int. Cl.: H01F 13/00, G01N 27/02

(54) **Procédé et dispositif pour créer dans un objet un ou plusieurs champs magnétiques de directions différentes, ou variables dans le temps**

(30) Priorité: 24.09.1993 FR 9311628
(71) Demandeur: INNOVATIONS RAYONS X ET TECHNIQUES RESSUAGE MAGNETOSCOPIE IXTREM, F-71100 Chalon sur Saone (FR)
(72) Inventeur: Crescenzo, Eric, F-57000 Metz (FR)
(74) Mandataire: Schmit, Christian Norbert Marie

(57) **Abrégé**

Le dispositif comporte au moins deux bobines (4, 5, 6) ayant des axes sensiblement orthogonaux, alimentées en courant électrique, chaque bobine s'étendant selon sa direction axiale sur au moins une grande partie d'une zone de traitement centrale (9), les bobines étant ainsi imbriquées les unes dans les autres, et agencées de manière que certaines parties (52) de leurs spires soient déformables ou déformées pour permettre de placer librement le dit objet dans la dite zone de traitement, ou de l'en retirer.

Pour magnétiser ou désaimanter l'objet (1), on alimente successivement chacune des bobines, de manière à créer successivement, sur toutes les faces de l'objet, deux champs magnétiques tangentiels de directions perpendiculaires, ou on alimente simultanément les bobines par un courant électrique périodique déphasé de 120° d'une bobine à l'autre, de manière à créer sur toutes les faces de l'objet un champ tournant ou oscillant.

Application notamment au contrôle non desctructif, en particulier par magnétoscopie.

## Description

La présente invention concerne un procédé et un dispositif pour créer dans un objet un ou plusieurs champs magnétiques de directions différentes, ou variables dans le temps, par exemple un champ tournant ou oscillant dans un plan, ou plusieurs champs tournants ou oscillants dans des plans différents, ou encore des champs de différentes directions créés successivement.

De tels champs trouvent leur application notamment dans le domaine du contrôle non destructif, par exemple le contrôle magnétoscopique, par flux de dispersion, par Courants de Foucault, etc, où il est nécessaire de magnétiser un objet, en matériau ferromagnétique, selon au moins deux directions perpendiculaires, afin de pouvoir déceler des défauts de surface, ou voisins de la surface, dans toutes les directions.

On sait par exemple que la méthode magnétoscopique permet la révélation de très petites fissures ou défauts à la surface et éventuellement sous la surface, étant donné qu'au niveau de ces fissures, en magnétisant opportunément la pièce, on produit un champ magnétique épars, capable d'attirer de très fins grains de substance magnétique à haute perméabilité magnétique, telle qu'une poudre.

Au niveau des défauts, il se forme des accumulations de cette poudre, visibles à l'oeil nu, tandis que le défaut même ne l'est pas.

Selon les exigences, on emploie des poudres de finesse convenable, unies à des oxydes colorés, de façon à offrir un bon contraste avec la surface à examiner (par exemple : poudre noire pour des surfaces rectifiées, rouge ou bien ocre pour des surfaces brunies, etc.).

Ces poudres sont toutes visibles à la lumière naturelle et permettent d'obtenir une bonne sensibilité, mais très fréquemment, on emploie des poudres magnétiques fluorescentes, visibles à la lumière de Wood.

La poudre peut soit être saupoudrée à sec sur la surface de l'objet, soit être en suspension dans un liquide, que l'on appelle alors encre magnétique, étalée sur la surface.

Le champ magnétique nécessaire peut être créé dans l'objet à contrôler de différentes façons, au moyen de bobines ou électroaimants, alimentés en courant continu, alternatif, ou pulsé. L'application de la poudre ou encre magnétique peut être effectuée soit pendant la magnétisation, soit après celle-ci, en profitant de la magnétisation résiduelle de l'objet.

Pour pouvoir détecter des défauts de surfaces orientés dans n'importe quelle direction, il est nécessaire de magnétiser l'objet de manière à créer à sa surface deux champs tangentiels de directions différentes, notamment perpendiculaires entre elles, ces champs pouvant être créés successivement, ou simultanément, en faisant varier leurs intensités respectives de manière à générer un champ résultant tournant ou oscillant.

Dans la pratique, en contrôle magnétoscopique, on procède à au moins deux magnétisations séparées avec des champs de directions différentes et à des observations intermédiaires de la répartition de la poudre, ou à deux ou plusieurs magnétisations successives, l'observation et l'interprétation des spectres de défauts se faisant après ces magnétisations.

Dans des installations de contrôle connues, pour créer des champs tournant ou oscillant, on crée, par exemple dans une pièce cylindrique, un champ circonférentiel par passage d'un courant électrique dans la pièce selon la direction axiale, et un champ axial par des bobines encerclantes coaxiales ou des électroaimants amenés en contact avec les extrémités de la pièce.

Un inconvénient de ces méthodes est qu'il y a nécessairement contact entre la pièce à contrôler et soit les touches ou tresse de contact pour assurer le passage du courant, soit les pôles magnétiques des électroaimants. Il en résulte qu'il est impossible de déceler les défauts dans ces zones de contact, et en conséquence, pour contrôler une pièce sur toutes ses faces, il est nécessaire de procéder à plusieurs magnétisations en déplaçant la pièce, pour changer ces zones de contact, entre deux magnétisations successives, ce qui conduit à une perte de temps importante, et à des difficultés pour positionner correctement la pièce par rapport aux moyens de création des champs magnétiques, surtout dans le cas de pièces de forme complexe. De plus, il n'est pas aisé de trouver sur de telles pièces des zones de contact appropriées, et les nombreuses mises en contact et ruptures de contact nuisent aux cadences de contrôle ainsi qu'à la pérennité des installations, par exemple et entre autres du fait de l'usure des tresses de contact électrique.

La présente invention a pour objet de résoudre les problèmes indiqués ci-dessus, et vise en particulier à permettre la création sur toute la surface, ou presque, d'un objet, de champs magnétiques de différentes directions, ou de direction variable, en limitant le plus possible le nombre de magnétisations, et donc les manipulations nécessaires pour magnétiser l'objet dans toutes les directions souhaitées, afin notamment de détecter de manière rapide et fiable des défauts de surface du dit objet.

Avec ces objectifs en vue, l'invention a pour objet un dispositif pour créer dans un objet placé dans une zone centrale de traitement un ou plusieurs champs de directions différentes, ou variables dans le temps, caractérisé en ce qu'il comporte au moins deux bobines ayant des axes sensiblement orthogonaux, alimentées en courant électrique, chaque bobine s'étendant selon sa direction axiale sur au moins une grande partie de la dite zone de traitement, les bobines étant ainsi imbriquées les unes dans les autres, et agencées de manière que certaines parties de leurs spires soient déformables ou déformées pour permettre de placer librement le dit objet dans la dite zone de traitement, ou de l'en retirer.

Le dispositif selon l'invention permet de remédier aux inconvénients précités, en supprimant toute nécessité de contact de l'objet avec les moyens générateurs de champs, et en permettant d'assurer une magnétisation de toutes les faces de l'objets, et dans plusieurs directions sur chaque face, sans manipulations de l'objet entre deux magnétisations, du fait que la zone de traitement est située en quelque sorte au coeur de chaque bobine. Comme chaque bobine s'étend axialement sur au moins une grande partie de la dite zone, le champ dans cette zone est le plus homogène possible. Par comparaison, par exemple, au champ qui serait créé par deux bobines coaxiales disposées de part et d'autre du produit, dont une grande partie des lignes de flux se reboucle sur chaque bobine au détriment de celles passant d'une bobine à l'autre, en générant d'ailleurs une perte d'énergie non négligeable, le champ créé par chaque bobine du dispositif selon l'invention passe quasi intégralement et dans une direction bien déterminée dans l'objet.

Un tel champ homogène est similaire à celui qui serait créé dans une pièce cylindrique par une bobine encerclante. Mais dans ce cas, le champ généré ne peut être orienté que dans une seule direction. Le dispositif selon l'invention permet de créer de tels champs dans au moins deux directions orthogonales, simultanément ou éventuellement successivement mais sans déplacement de l'objet, en enrobant la zone de traitement par les différentes bobines, tout en prévoyant des parties déformables de spires d'au moins une bobine, pour que l'objet puisse être placé et retiré de la zone centrale de traitement.

Il est précisé que par parties de spires déformables, il doit être compris que ces parties peuvent être effectivement déformables, et donc mobiles pour laisser le libre passage de l'objet lors de son introduction ou de son retrait du dispositif, tout en pouvant être repositionnées autour de l'objet une fois que celui-ci est en place, pour l'enrober le mieux possible, mais également que ces parties peuvent rester déformées en permanence par exemple pendant toutes les magnétisations d'une série d'objet. Dans ce dernier cas, les pièces sont moins bien enveloppées par les différentes bobines au cours de leur magnétisation, mais la dite déformation des parties de spires est effectuée, comme on le comprendra mieux par la suite, de manière que le champ généré par ces bobines à spires déformées demeure homogène.

On notera que, de manière générale, la déformabilité, ou la déformation, des dites parties de spires peut être pratiquement obtenue par une simple mise en forme par pliage ou cintrage des parties de spires concernées. Cependant, il doit être compris comme faisant partie de l'invention, le cas où la déformation des spires serait obtenue par une coupure de celles-ci et un rétablissement ultérieur de leur continuité.

Il est encore précisé que chaque bobine peut également être pratiquement constituée sous forme de plusieurs bobinages réalisés séparément mais associés et alimentés en courant électrique de manière à avoir le même effet qu'une unique bobine.

Selon une disposition préférentielle les spires de chaque bobine sont déformables, dans un plan perpendiculaire à l'axe de la bobine, en fonction des formes du dit objet, pour réduire au maximum la distance entre les spires et le dit objet, et ainsi concentrer le flux dans l'objet et améliorer l'efficacité de la magnétisation, tant du point de vue rendement énergétique que de l'homogénéité du champ dans l'objet.

L'invention a aussi pour objet un procédé de magnétisation ou désaimantation d'un dispositif tel que défini ci-dessus, comportant trois bobines, et on alimente successivement chacune des dites bobines par un courant électrique de sens constant, de manière à créer globalement sur toutes les faces de l'objet deux champs magnétiques de directions perpendiculaires. Dans ce cas, les champs de différentes directions sont créés successivement, mais du fait de la magnétisation résiduelle subsistant dans une direction même lors de l'application ultérieure d'un champ selon une autre direction, il subsiste localement, à proximité des défauts, après les différentes magnétisations, des champs orientés dans les dites différentes directions, qui permettent de révéler ces défauts lors de l'application de la poudre ou de l'encre magnétique.

Préférentiellement cependant, pour créer à la surface de l'objet des champs oscillants ou tournants, on alimente simultanément les dites bobines par un courant électrique périodique déphasé de 120° d'une bobine à l'autre, de manière à créer sur toutes les faces de l'objet le dit champ tournant ou oscillant. Outre la plus grande rapidité de la magnétisation, on effectue par cette méthode un balayage des surfaces de l'objet, ce qui revient à créer au niveau de ces surfaces des champs multidirectionnels, au lieu des seuls champs, sensiblement perpendiculaires, entre eux, selon le procédé précédent. De plus, il est alors possible d'utiliser directement le courant du secteur de distribution, à une fréquence d'environ 50 Hz, éventuellement en en réduisant la tension par un transformateur. De plus encore, à une telle fréquence, l'effet de magnétisation rémanente indiqué préalablement, fait que l'effet d'un champ qui a une certaine direction instantanée, n'est pas supprimé par le champ créé ultérieurement dans une autre direction lors de la rotation ou de l'oscillation de cette direction.

Il s'ensuit que, globalement, même après un grand nombre d'oscillations en rotation de la direction du champ résultant créé à la surface de l'objet, il subsiste simultanément des champs localisés ayant des orientations diverses, qui permettent ainsi de visualiser des défauts quelque soit la direction de ceux-ci.

En vue de créer des champs tournants, le courant d'alimentation des bobines est alternatif, préférentiellement sinusoïdal ou sensiblement sinusoïdal. En vue de créer des champs oscillants, il faut alimenter au moins une des bobines par un courant de sens constant, continu ou pulsé, selon différentes combinaisons, par exemple : les trois bobines sont alimentées par des courants pulsés déphasés, ou bien l'une est alimentée en courant continu et les deux autres en courants pulsés ou alternatifs, ou encore l'une au moins est alimentée en courant pulsé, et la ou les autres en courant alternatif.

D'autres caractéristiques et avantages apparaîtront dans la description qui va être fait d'un dispositif et d'un procédé conformes à l'invention, pour le contrôle magnétoscopique d'objets ferromagnétiques, tels que par exemples des pièces mécaniques, obtenues par fonderie ou forgeage, pour des véhicules automobiles.

On se reportera aux dessins annexés, dans lesquels :
- la figure 1 est une représentation schématique en perspective du dispositif,
- la figure 2 est une vue en coupe du dispositif selon un plan médian horizontal, illustrant le principe de la création de champs orthogonaux,
- les figures 3 à 5 sont des vues en éclaté du dispositif de la figure 1, montrant respectivement la disposition de chacune des trois bobines,
- la figure 6 est une représentation schématique en plan d'une pièce complexe lors de la mise en oeuvre du procédé,
- la figure 7 est une vue en perspective du plateau de support portant un porte-fusée d'une roue directrice de voiture, avec les accessoires nécessaires à une magnétisation optimale de toute la surface de cette pièce,
- la figure 8 est une représentation schématique d'une autre pièce, tubulaire, à traiter, montrant l'utilisation de concentrateurs de flux pour magnétiser les surfaces internes de cette pièce,
- la figure 9 est une vue de détail de l'extrémité d'un concentrateur de flux, utilisé pour minimiser les effets indésirables des champs orientés localement perpendiculairement à une face d'un objet à magnétiser.

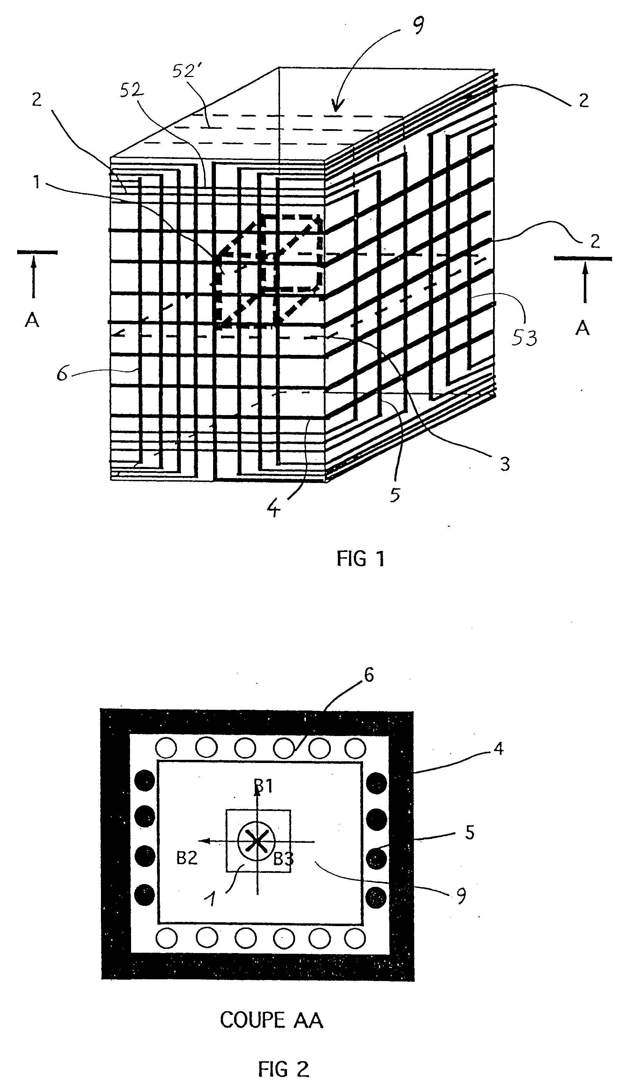

Le dispositif représenté schématiquement à la figure 1 comporte trois bobines 4, 5 et 6 formées de conducteurs électriques 2 et alimentées à partir d'une source de courant électrique non représentée. Les trois bobines sont imbriquées les unes dans les autres de manière que leurs axes respectifs soient orthogonaux entre eux. Elles déterminent ainsi entre elles une zone centrale de traitement 9 dans laquelle est placée un plateau amovible 3 (représenté uniquement par son contour sur la figure 1) destiné à supporter un objet 1 que l'on souhaite soumettre à un contrôle magnétoscopique. Pour simplifier la représentation, et faciliter la compréhension, le dispositif a été représenté sur les figures 1 à 5 sous une forme générale cubique, de même que l'objet 1, mais on comprendra aisément que, notamment pour assurer le meilleur rendement de la magnétisation à laquelle l'objet 1 doit être soumis, cette forme pourra être adaptée en fonction de la forme propre du dit objet.

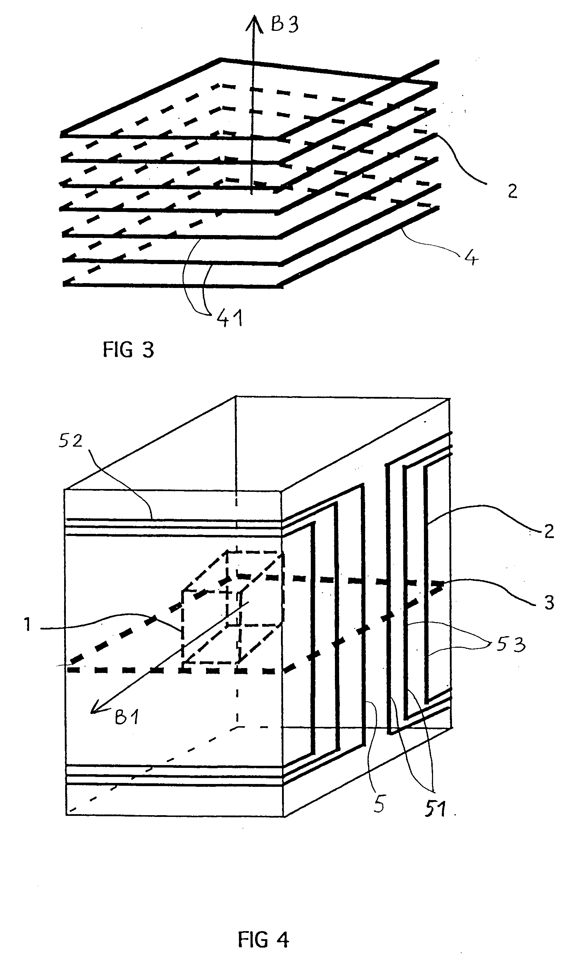

Comme on le comprendra mieux au vu des figures 2 à 5, la bobine 4 a, dans la représentation montrée sur ces dessins, son axe vertical, et s'étend verticalement sur une hauteur relativement importante, nettement supérieure à la dimension, considérée dans le sens vertical, de l'objet 1. Chaque spire 41 de cette bobine s'étend intégralement dans un plan horizontal. Comme le montrent les figures 2 et 3, la bobine 4, lorsqu'elle est alimentée en courant électrique, génère un champ magnétique B3 vertical, dont le sens est fonction du sens du courant dans ses spires.

La bobine 5 a son axe horizontal, et crée essentiellement, lorsqu'elle est alimentée en courant électrique, un champ B1 (figures 2 et 4). Cette bobine 5 est donc à considérer comme ayant son axe orienté selon la direction correspondant à B1, mais certaines parties 52 de ses spires 51 sont déformables de manière à permettre l'introduction dans la zone de traitement 9 du plateau 3 et de l'objet 1. Cette capacité de déformation des dites parties de spires est illustrée sur la figure 1 où l'on a représenté en pointillé 52' les dites parties de spires dans leur position non déformées, et en traits pleins (52) les dites parties de spires dans leur état déformé. Par souci de clarté des dessins, on a représenté les parties de spires déformées 52 entièrement rabattues sur les faces latérales de la forme cubique, et dégageant donc entièrement la face supérieure. On comprendra aisément que dans la pratique, il peut suffire d'écarter les spires (à partir de leur position 52') seulement de la distance nécessaire pour pouvoir placer l'objet 1 dans la zone centrale 9.

Toutefois, la position de déformation représentée peut également être conservée à demeure, c'est-à-dire sans replacer les spires dans leur position 52', lors de la magnétisation. En effet, compte tenue que la longueur de cette bobine 5 est nettement supérieure à la dimension de l'objet 1 dans la direction axiale de la bobine, ce sont essentiellement les parties de spires non déformées (parties verticales 53) , qui sont les plus proches de l'objet, qui exercent l'effet de magnétisation de l'objet 1, et les perturbations inévitables de champ provoquées par la déformation des parties de spires 52 ne sont pas rédhibitoires à l'obtention d'un champ suffisamment homogène dans la zone où est placé l'objet 1. Dans la pratique, l'homme du métier n'aura aucune difficulté à positionner les parties de spires déformées 52 de la manière la plus adaptée à la configuration des objets à traiter, en tenant compte de l'encombrement de ces spires et de celles des autres bobines, et pour limiter le plus possible les dites perturbations.

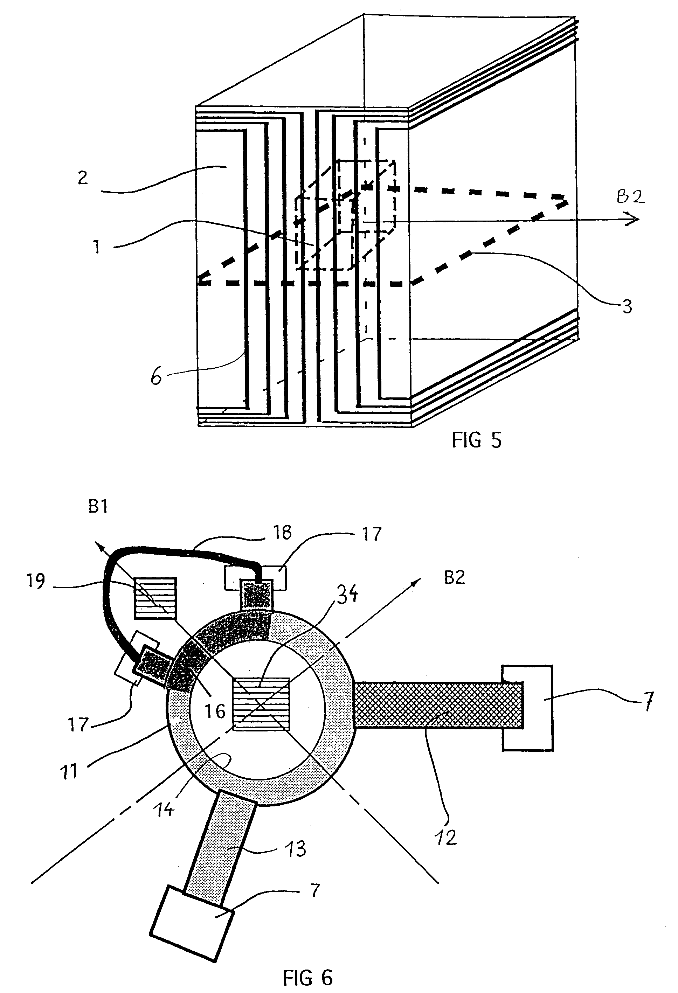

La bobine 6, d'axe orthogonal aux axes des deux autres bobines 4 et 5, est configurée de manière similaire à la bobine 5, comme on le voit sur les figures 2 et 5, pour créer un champ B2 de direction générale orthogonale aux champs B1 et B3.

Par rapport à des systèmes de magnétisation connus utilisant, pour créer un champ dans une direction donnée, deux bobines coaxiales disposées de part et d'autre de l'objet à magnétiser, la disposition de chacune des bobines selon l'invention permet de placer l'objet au coeur même des bobines, et le plus loin possible des extrémités des bobines, pour éviter des fuites magnétiques dans la zone où se trouve le dit objet, et favoriser l'uniformité du champ à la surface de celui-ci, tout en réduisant notablement la consommation d'électricité, par rapport aux dits systèmes connus, pour obtenir une intensité de magnétisation équivalente.

De plus, grâce à l'imbrication des bobines, comme cela a déjà été indiqué, il est possible avec le dispositif selon l'invention de magnétiser un objet 1 selon plusieurs directions de magnétisation en un même endroit, pour pouvoir déceler des défauts quelle que soit leur orientation, sans devoir déplacer l'objet par rapport aux moyens de création du champ, ni devoir procéder pour cela a des mouvements mécaniques de pôles ou touches de contact.

Pour limiter au maximum la consommation d'énergie, il est souhaitable que l'entrefer entre les spires et l'objet 1 soit le plus réduit possible. C'est pourquoi la forme des spires, considérée dans le plan perpendiculaire à la direction axiale de la bobine concernée, peut être adaptée à la forme du ou des objets à traiter. Pour des raisons de facilité de réalisation du dispositif, la forme de base des spire est préférentiellement simple (ronde, carrée, ou rectangulaire). Toutefois, pour réduire au maximum les pertes d'énergie, certaines parties des spires, autres que les parties 52 déformées pour permettre l'accès et le retrait de l'objet, peuvent également être déformées pour les adapter au mieux à la forme du dit objet.

Pour magnétiser successivement l'objet 1 pratiquement sur toutes ses faces et selon deux directions perpendiculaire, et procéder à son contrôle magnétoscopique, il faut procéder à un minimum de trois magnétisations successives (soit séparées avec des interprétations intermédiaires des spectres visualisés par la poudre magnétique, soit successives avec une interprétation en fin d'opération) dont les directions sont sensiblement perpendiculaires entre elles. Ce principe constitue la base d'utilisation du dispositif selon l'invention.

Ainsi, les trois bobines 4, 5, 6, imbriquées l'une dans l'autre de façon à créer en l'absence de l'objet 1 des champs magnétiques dont les directions sont sensiblement perpendiculaires entre elles, permettent d'obtenir séparément en présence de l'objet 1, sur toutes les faces de ce dernier, en trois magnétisations successives utilisant respectivement chacune de ces trois bobines, alimentées par un courant de sens constant ou non, les deux champs magnétiques requis de directions perpendiculaires entre elles.

Bien que cette première méthode présente déjà, par rapport aux méthodes de l'art antérieur, l'avantage de ne pas nécessiter de déplacement de l'objet pour changer son orientation par rapport aux moyens de création du champ, l'invention permet, de manière encore plus avantageuse, de générer, en une même opération, des champs tournants ou oscillants, ainsi que cela va être maintenant expliqué.

On sait de manière générale qu'il est possible de générer un champ magnétique tournant en couplant selon deux directions perpendiculaires, deux champs sinusoïdaux déphasés entre eux de 90°, ou encore un champ oscillant en couplant de même par exemple un champ sinusoïdal et un champ continu ou sensiblement continu ou pulsé, de sens constant. Ce principe est par exemple utilisé dans des systèmes de magnétisation connus utilisant par exemple une bobine encerclante alimentée en courant continu pour créer un champ axial continu, et un passage de courant alternatif dans le produit selon cette direction axiale, pour créer un deuxième champ circonférentiel sinusoïdal, la combinaison des deux champs conduisant à un champ résultant oscillant.

Le dispositif selon l'invention permet de créer, sur le même principe, des champs tournants ou oscillants, mais ceci simultanément sur toutes les faces de l'objet, ce que ne permettent pas les systèmes connus dans les techniques antérieures.

Pour cela, on utilise le dispositif selon l'invention en alimentant simultanément les trois bobines de manière à créer trois champs magnétiques sinusoïdaux déphasés entre eux d'environ 120°. La magnétisation simultanée de toutes les faces de l'objet qui en résulte présente de plus l'avantage de réduire fortement l'influence des composantes de champ normales à la surface de l'objet, dues à l'entrée ou la sortie des lignes de flux créées par l'une quelconque des bobines, puisque simultanément y est superposé le champ tangentiel tournant ou oscillant créé par les deux autres bobines.

Cette valeur de 120° est caractéristique puisqu'elle correspond à un déphasage équilibré entre chacun des trois champs magnétiques créés par les bobines 4, 5 6. Il es possible d'utiliser des valeurs de déphasage différent ; dans ce cas, il convient d'éviter les valeurs proches de 0° ou de 90° et 180° qui conduisent à obtenir deux voir trois champs magnétiques en phase et par conséquent ne permettent pas d'obtenir des champs magnétiques tournants permettant de déceler des défauts quelle que soit leur orientation. Cette valeur de 120° correspond également au déphasage obtenu avec des alimentations de tension triphasées utilisant le réseau de distribution de l'électricité ce qui facilite l'exploitation industrielle du procédé selon l'invention.

En fait, il apparaîtra clairement au technicien que ce n'est pas exactement les tensions d'alimentation des trois bobines 4, 5, 6 qui doivent être déphasées de 120° mais plutôt l'intensité du courant magnétisant alimentant chacune de ces trois bobines. Il peut être nécessaire d'adapter les impédances entre ces trois bobines pour tenir compte des déphasages entre la tension et l'intensité du courant alimentant chacune de ces bobines, liés à des inductances de valeurs différentes. Cette adaptation d'impédances s'effectue en ajoutant de selfs de compensation ou en adaptant le nombre de spires des différentes bobines.

D'une façon générale, industriellement il est préférable d'utiliser comme sources d'alimentation électrique triphasée celle provenant du réseau de distribution de l'électricité, dont la fréquence en France est de 50 Hz, moyennant généralement d'y ajouter un transformateur abaisseur de tension pour des raisons de sécurité lors de l'utilisation en dispositif.

Lorsque les bobines 4, 5, 6 sont alimentées sous des tensions électriques déphasées entre elles de 120° par l'intermédiaire du secteur de distribution d'électricité par exemple, permettant d'obtenir des tensions de forme parfaitement sinusoïdale, il se crée un champ magnétique tournant sur toutes les faces de l'objet 1, étant donné que chaque bobine génère séparément sur certaines faces de l'objet 1, un champ magnétique tangentiel sinusoïdal dont la direction est perpendiculaire à celle de l'un des champs magnétiques tangentiel créé par l'une des deux autres bobines.

Lorsqu'on utilise des alimentations dont la forme d'onde s'écarte d'une sinusoïde pure, le champ magnétique créé tournera "moins bien", c'est-à-dire le balayage par le vecteur champ magnétique ne se fera plus sur 360°, ou la norme de ce vecteur variera avec sa position angulaire. Dans le contrôle non destructif par magnétoscopie, cela n'est pas spécialement gênant. C'est la raison pour laquelle un champ magnétique oscillant est admissible dès l'instant, qu'il y a un balayage par le vecteur champ magnétique sur au moins 90°, tout en conservant une intensité suffisante durant ses oscillations, et ceci au moins selon deux directions perpendiculaires, permettant ainsi la détection des défauts quelle que soit leur orientation (les principales normes précisent que la valeur du champ magnétique tangentiel doit être comprise entre 2 400 et 4 000 A/m). En effet, pour la magnétoscopie, il est établie que deux magnétisations dont les directions sont perpendiculaires entre elles en obtenant des valeurs de champ magnétique tangentiel suffisants (supérieures ou égales à 2 400 A/m) selon ces deux directions sont nécessaires pour déceler les défauts quelles que soient leurs orientations.

Il est donc possible d'utiliser des formes d'onde alternative ou pulsée (par exemple redressé une alternance) , pour faire le contrôle non destructif par magnétoscopie en utilisant le dispositif selon l'invention pour obtenir des champs magnétiques oscillants.

L'imbrication des bobines du dispositif selon l'invention permet donc de générer les champs requis pour le contrôle magnétoscopique d'un objet, mais dans le cas où cet objet est de forme complexe, par exemple une pièce comportant des parties allongées, et d'autres parties en creux, il est préférable, pour pouvoir effectuer un contrôle fiable sur toutes les surfaces de cette pièce, d'adapter le dispositif en lui ajoutant des moyens permettant de magnétiser correctement, c'est-à-dire suffisamment et de manière la plus homogène possible, les surfaces des dites parties de forme complexe.

De tels moyens vont être décrits en relation avec les figures 6 à 9.

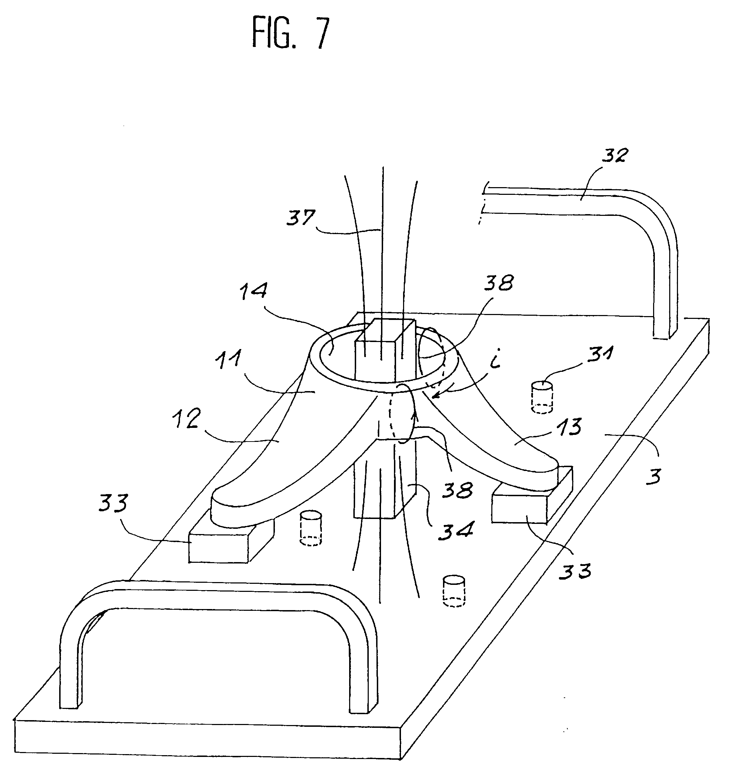

Sur le dessin de la figure 7, on a représenté à titre d'exemple un plateau 3 supportant une pièce de forme complexe 11, ici un porte-fusée de roue d'automobile. Le plateau 3 est réalisé en un matériau amagnétique, par exemple en acier inoxydable, ou en matière plastique, et percé d'une pluralité de trous 31 destinés à permettre l'écoulement de l'encre magnétique en surplus, utilisée pour révéler les défauts de la pièce 11. Le plateau est muni de poignées 32 pour faciliter son introduction dans la zone de traitement 9, en le faisant passer dans l'espace libéré par la déformation des parties de spires 52. Bien évidemment, le plateau peut être aussi réalisé sous d'autres formes que celle représentée, et amené dans la zone de traitement par tout autre moyen de manipulation (convoyeur, bras de manutention, etc).

La pièce 11 est auparavant positionnée sur le plateau sur lequel elle repose par les extrémités de parties allongées 12, 13 par l'intermédiaire de plots de supports 33 en matériau ferromagnétique, qui comme on le verra par la suite, servent également de rallonges ferromagnétiques.

En plus, un barreau ferromagnétique 34 est placé verticalement sur le plateau, passant à travers un alésage 14 de la pièce 11, et dépassant largement axialement de part et d'autre de cet alésage. Ce barreau magnétique sert à canaliser le flux magnétique, pour créer par induction des champs tangentiels notamment à la surface interne de l'alésage 13, comme cela sera aussi expliqué par la suite.

De tels plateaux supports 3 sont utilisés dès lors que la pièce à magnétiser présente des particularités géométriques tels que trous, des sens magnétiquement longs (c'est-à-dire des parties allongées qui ont naturellement tendance à orienter un champ magnétique qui y est créé dans la direction longitudinale de cette partie) ou encore des difficultés à être magnétisé correctement sans laisser de zones mortes (zone présentant un champ magnétique tangentiel de faible valeur).

On comprendra facilement que ces directions de magnétisation préférentielles gênent l'obtention de champs magnétiques tournant correctement, ou encore l'obtention d'un champ magnétique dont la direction est perpendiculaire à ces directions préférentielles, ce qui a pour conséquent de ne pouvoir effectuer le contrôle magnétoscopique dans de bonnes conditions.

Pour réduire les effets de magnétisation préférentiels selon une ou plusieurs directions, dûs à la morphologie de la pièce 11, il convient que la pièce 11 soit déposée sur le plateau support 3 de façon que les direction de magnétisation préférentielles des parties allongées 12, 13 soient décalées, par rapport aux directions principales des champs magnétiques créés par les bobines 4, 5, 6, d'un angle le plus proche possible de 45°, compatible avec le fait d'obtenir sensiblement la même valeur de décalage angulaire pour les différentes parties allongées de la pièce. Dans le cas où la pièce comporte une partie présentant magnétiquement un sens long plus marqué que d'autres, on privilégiera l'orientation à environ 45° de cette partie, par rapport aux orientations des autres parties, afin d'obtenir globalement le meilleur permettant une détection fiable des défauts quelles que soient leur orientation et leur position à la surface de la pièce.

Ceci est illustré par le dessin de la figure 6, où on a représenté schématiquement en vue de dessus, la pièce de forme complexe 11 comportant deux parties allongées 12, 13, et où on remarque que les directions longitudinales de ces parties allongées ont été décalées angulairement par rapport aux directions des champs B1 et B2 créés par les bobines 5 et 6.

Sur la figure 6, on a également représenté des rallonges ferromagnétiques 7 qui, comme indiqué plus haut, peuvent également servir comme plots de support 33 de la pièce 11. Ces rallonges ferromagnétiques, tout comme les barreaux ferromagnétiques 34 déjà mentionnés, sont préférentiellement constitués d'empilages de tôles isolées électriquement entre elles pour éviter une circulation interne de courants de Foucault résultant des variations du champ créé par les bobines, et l'échauffement qui en résulterait. Par ailleurs, ces tôles sont choisies en un matériau de haute perméabilité magnétique pour éviter les pertes de champ, et de faible rémanence pour éviter des perturbations magnétiques dans la pièce 11 pendant et après les magnétisations.

Les rallonges magnétiques 7, en contact avec certaines zones de surface de la pièce 11, notamment les extrémités de ses parties allongées 12, 13, servent à assurer une continuité magnétique au niveau de ces zones, pour en éloigner le pôle magnétique qui s'y créerait en leur absence du fait des directions de magnétisation préférentielle évoquées précédemment, et qui aurait un effet néfaste à une bonne détection des défauts au voisinage de ces zones.

Bien qu'elles puissent être simplement posées sur le plateau 3 et seulement placées au contact de la pièce 11 dans les zones désirées, préférentiellement, ces rallonges ferromagnétiques servent également de plots de supports de la pièce, ce qui permet de réduire le nombre de zones non contrôlées dues aux surfaces de contact entre la pièce 11 et les dites rallonges ou plots de support.

Les barreaux ferromagnétiques agissant comme focalisateurs de flux magnétique peuvent, selon leur configuration et leur disposition par rapport à la pièce 11, être utilisés à des fins différentes, qui cependant concourent toutes à une meilleure magnétisation de toute la surface de la pièce.

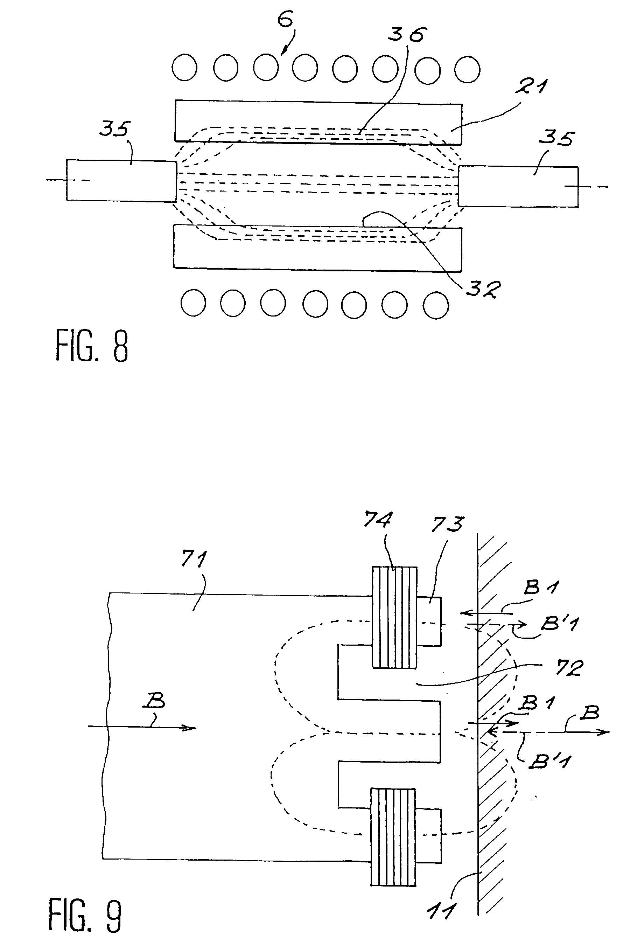

Par exemple, comme représenté figure 8, pour le contrôle magnétoscopique de pièces comportant un alésage, tel que la pièce tubulaire 21, deux barreaux 35 sont disposés sensiblement dans l'axe de l'alésage 22, avec leurs extrémités proches des extrémités du dit alésage. Le flux, créé par une des bobines 4, 5, 6 est capté par ces barreaux qui agissent comme des concentrateurs de flux et redirigent au moins en partie les lignes de flux 36 vers la surface de l'alésage 22, ce qui permet de magnétiser cette surface, alors qu'en l'absence de ces barreaux, la forme tubulaire de la pièce aurait constitué un écran empêchant la magnétisation directe de cette surface par le champ créé par la bobine.

On comprendra aisément que des barreaux magnétiques peuvent être utilisés de manière similaire pour canaliser le ou les flux magnétiques créés par l'une ou plusieurs des bobines 4, 5, 6, et le rediriger vers la pièce à contrôler dans les zones souhaitées et selon la direction souhaitée, par exemple pour pouvoir magnétiser des parties internes creuses telles que trous traversants ou borgnes, ou cavités diverses constituant des blindages magnétiques, ou encore pour forcer les lignes de flux à s'orienter selon une ou des directions données, pour permettre le contrôle de zones de la pièce où le flux serait sinon trop faible pour déceler les défauts, ou encore pour éviter des fuites magnétiques sur certaines zones de la pièce, nuisant à la détectabilité des défauts.

Des barreaux ferromagnétiques peuvent aussi être utilisés comme le barreau 34, en étant placés dans des trous traversant, tel l'alésage 14, de façon à induire un champ magnétique circulaire au niveau des surfaces internes et externes de la partie de pièce comportant l'alésage, par effets dûs aux courants de Foucault. Ainsi, sur la figure 7, on a représenté les lignes de flux 37 générées dans le barreau 34 par le champ vertical B3 créé par la bobine 4, alimenté en courant alternatif. Les variations de ce flux induisent dans la pièce 11, des courants de Foucault circonférentiels i qui créent à leur tour un champ circulaire dont les lignes de flux 38 s'étendent au voisinage de la surface interne et des surfaces externes de la partie centrale de la pièce 11.

Ce type de champ permet de déceler principalement des défauts orientés selon une direction périphérique, ou même pouvant aller jusqu'à 45° par rapport à cette direction. Dans le cas de pièces de forme complexe comme celle représentée figure 6 et 7, qui présentent des parties allongées liée à la partie centrale comportant l'alésage, les lignes de flux 18 sont alors distordues à proximité de ces parties allongées.

Pour favoriser cet effet inductif, il faut augmenter, dans la mesure du possible, la longueur des barreaux ferromagnétiques de façon que ceux-ci, dépassant largement des deux côtés des trous dans lesquels ils sont introduits, canalisent parfaitement les lignes de flux magnétiques provenant de l'une ou des bobines 4, 5, 6.

Dans certains cas, les rallonges ferromagnétiques, qu'elles servent ou non également de plots de support de la pièce, peuvent être reliées entre elles par des conducteurs électriques. Cette variante est illustrée à la figure 6, où l'on voit de telles rallonges 17, reliées par le conducteur 18, de manière à constituer une spire fermée sur elle-même avec la partie 16 de la pièce située entre les deux rallonges 17. Le contact électrique est établi par la force d'attraction magnétique s'exerçant entre la pièce 11 et ces rallonges 17.

La spire ainsi formée, soumise aux variations de flux créées par les bobines 4, 5, 6 alimentées en courant variable, est parcourue par des courants de Foucault qui génèrent à leur tour dans la partie 16 de la pièce un champ magnétique circulaire favorisant la détection de défauts dans cette partie. Cet effet peut encore être accentué en plaçant dans la spire ainsi formée un autre barreau magnétique 19 canalisant les flux magnétiques créés par les bobines 4, 5, 6.

Le bon contact électrique entre le conducteur 18 et la partie 16 de la pièce 11 peut être établi soit en glissant le conducteur 18 entre la pièce 11 et le plot ferromagnétique 17, en profitant de la force d'attraction entre ceux-ci, soit en reliant électriquement le plot ferromagnétique 17 avec le conducteur électrique 18 par un système de connexion électrique adapté.

Selon une variante, au lieu d'utiliser l'effet inductif, il est aussi possible de se servir de plots ferromagnétiques 17 en les reliant à une source de courant électrique extérieure permettant de faire passer directement un courant électrique dans la pièce sans utiliser des moyens traditionnels, tels que des vérins, pour assurer le contact électrique qui s'établit par le simple fait de la force magnétique entre la pièce 11 et les plots ferromagnétiques 17. Il est possible de procéder comme précédemment pour assurer la liaison électrique entre la pièce 11 et les conducteurs 18 reliés à la source de courant.

Dans tous les cas d'utilisation de rallonges ou barreaux ferromagnétiques, il est généralement souhaitable de conformer ceux-ci pour qu'ils présentent une extrémité de section réduite de façon à focaliser le flux magnétique dans une zone de dimension réduite et/ou dans une ou des directions souhaitées, et aussi à réduire le plus possible la surface de contact le cas échéant, ou à réduire la zone de perturbation magnétique lorsqu'il n'y a pas contact.

En effet, ces rallonges ou barreaux peuvent avoir localement sur la pièce un effet négatif en favorisant une direction des lignes de flux normale à la surface voisine de leurs extrémités. Or, un champ magnétique normal à la surface de la pièce est susceptible de créer un flocage de la poudre ou de l'encre magnétique lors du contrôle magnétoscopique, empêchant une bonne détection des défauts.

Comme de tels champs normaux à la surface ne peuvent pratiquement être totalement supprimées, il est cependant souhaité de réduire le plus possible leurs effets. A cette fin, une méthode consiste à localiser dans une zone déterminée l'introduction des lignes de flux dans la pièce, et à déplacer cette zone en fonction du temps. Cette méthode peut être mise en oeuvre lors de l'utilisation du dispositif selon l'invention, avec des barreaux ferromagnétiques dont une extrémité, positionnée face à une zone de surface de la pièce 11, est conformée comme représentée figure 9. Le barreau ferromagnétique 71 comporte à son extrémité des encoches 72 délimitant des créneaux 73 sur lesquels sont placés tous les deux créneaux, des bobines de Frager 74 dont le circuit formé par leurs spires est électriquement fermé sur lui-même. De la sorte, une variation de flux du champ générateur B dans le barreau magnétique crée dans les bobines de Frager des courants qui tendent à s'opposer à cette variation en créant une variation de flux en sens contraire. Ainsi, par exemple, en considérant les deux créneaux 73 supérieurs de la figure 9, si le champ B augmente, la variation de flux correspondante provoque dans le créneau 73 une variation de flux qui tend à s'y opposer, matérialisée sur la figure par la ligne pointillée et les flèches B1. A l'inverse, quand B diminue, le champ selon la dite ligne de flux s'inverse (flèche B'1) et ainsi de suite. Il s'ensuit que, du fait de la présence des dites bobines qui tendent à créer un flux circulant variable, en opposition des variations du flux du champ générateur B, dont les lignes se bouclent en passant par deux créneaux, il se crée un champ normal à la surface de la pièce 11 qui change de sens entre un créneau et le créneau voisin. Comme le champ générateur B est lui-même variable puisque généré par une bobine alimentée en courant alternatif, les champs locaux en face de chaque créneaux varient de même, ce qui conduit à ce que le champ normal, au niveau de la surface de la pièce, oscille dans le temps entre les différents créneaux, en effectuant une sorte de balayage (dans le sens vertical sur la figure 9) de la surface située face à l'extrémité du barreau 71, ces déplacements ayant pour effet de réduire l'influence négative du champ normal sur la détection des défauts.

Le dispositif selon l'invention peut aussi être utilisé pour désaimanter des objets 1. Dans ce cas, la désaimantation de l'objet 1 par décroissance d'un ou de plusieurs champs magnétiques s'obtient, en utilisant l'une au moins des bobines 4, 5, 6 prises séparément ou dans leur totalité, par création d'un champ magnétique tournant, en ôtant l'objet 1 et en l'éloignant d'une distance suffisante des bobines jusqu'à obtenir une valeur de champ magnétique pratiquement nulle sur les faces de l'objet 1, ou encore en laissant l'objet 1 à l'intérieur de ces bobines, et en opérant à une décroissance de champ magnétique obtenue par une diminution progressive de l'intensité du courant d'alimentation.

L'invention n'est pas limitée aux dispositifs, variantes et procédés de mise en oeuvre décrits ci-dessus à titre d'exemple. En particulier, elle peut être utilisée pour des méthodes de contrôle non destructifs autres que la magnétoscopie, ou, de manière générale, dans tous les cas où l'on souhaite créer dans un objet quelconque des champs magnétiques orientés selon diverses directions, ou des champs tournants ou oscillants dans des plans de diverses directions.

## Revendications

1. Dispositif pour créer dans un objet (1) placé dans une zone centrale de traitement (2) un ou plusieurs champs de directions différentes, ou variables dans le temps, caractérisé en ce qu'il comporte au moins deux (4, 5, 6) bobines ayant des axes sensiblement orthogonaux, alimentées en courant électrique, chaque bobine s'étendant selon sa direction axiale sur au moins une grande partie de la dite zone de traitement, les bobines étant ainsi imbriquées les unes dans les autres, et agencées de manière que certaines parties (52) de leurs spires soient déformables ou déformées pour permettre de placer librement le dit objet dans la dite zone de traitement, ou de l'en retirer.

2. Dispositif selon la Revendication 1, caractérisé en ce que les spires (41, 51) de chaque bobine (4, 5, 6) sont déformables, dans un plan perpendiculaire à l'axe de la bobine, en fonction des formes du dit objet, pour réduire au maximum la distance entre les spires et le dit objet.

3. Dispositif selon l'une des Revendications précédentes, caractérisé en ce qu'il comporte un plateau de support (3) en matériau amagnétique, placé dans la dite zone centrale (9).

4. Dispositif selon la Revendication 3, caractérisé en ce que le plateau de support (3) est pourvu de rallonges ferromagnétiques (7) destinées à être placées en contact avec certaines parties de l'objet pour éloigner de ces parties le pôle magnétique qui serait créé en extrémité de ces parties par un ou plusieurs des dits champs créés par les dites bobines.

5. Dispositif selon la Revendication 4, caractérisé en ce que au moins certaines de ces rallonges magnétiques servent de support (33) pour le dit objet.

6. Dispositif selon l'une des Revendications 4 ou 5, caractérisé en ce que certaines (17) des dites rallonges ferromagnétiques sont reliées entre elles par un conducteur électrique (18), de manière à former avec une partie (16) de l'objet située entre les dites rallonges une spire soumises aux variations du ou des champs magnétiques créés par les dites bobines.

7. Dispositif selon la Revendication 3, caractérisé en ce que le plateau de support est pourvu de barreaux ferromagnétiques (35) destinés à être placés à proximité de certaines zones du dit objet, pour y concentrer les lignes de flux (36) du ou des champs magnétiques créés par les dites bobines.

8. Dispositif selon la Revendication 3, caractérisé en ce que le plateau de support est pourvu de barreaux ferromagnétiques (34) destinés à être placés dans des orifices (14) débouchants de l'objet (11) pour induire un champ magnétique circulaire à la surface de l'objet autour des dits orifices.

9. Procédé de magnétisation ou désaimantation d'un objet (1) en matériau ferromagnétique pour créer à sa surface des champs magnétiques tangentiels, caractérisé en ce que on place le dit objet dans une zone centrale (9) d'un dispositif selon l'une des Revendications 1 à 8 comportant trois bobines (4, 5, 6), et on alimente successivement chacune des dites bobines par un courant électrique, de manière à créer globalement sur toutes les faces de l'objet deux champs magnétiques de directions perpendiculaires.

10. Procédé de magnétisation ou désaimantation d'un objet (1) en matériau ferromagnétique pour créer à sa surface des champs magnétiques tangentiels tournants ou oscillants, caractérisé en ce que on place le dit objet (1) dans une zone centrale (9) d'un dispositif selon l'une des Revendications 1 à 8 comportant trois bobines (4, 5, 6), et on alimente simultanément les dites bobines par un courant électrique périodique déphasé de 120° d'une bobine à l'autre, de manière à créer sur toutes les faces de l'objet le dit champ tournant ou oscillant.

11. Procédé selon la Revendication 10, caractérisé en ce que, en vue de créer des champs tournants, le dit courant est sensiblement sinusoïdal.

12. Procédé selon la Revendication 10, caractérisé en ce que, en vue de créer des champs oscillants, au moins un des courants d'alimentation d'une des bobines est de sens constant pulsé ou continu.

13. Procédé selon l'une des Revendications 9 à 12, caractérisé en ce que, en vue de la désaimantation de l'objet, on fait décroître progressivement l'intensité du ou des champs magnétiques générés dans le dit objet en diminuant progressivement l'intensité du courant d'alimentation des bobines, ou en éloignant l'objet des dites bobines en le retirant du dispositif.
